# EUROPEAN PATENT SPECIFICATION

(11) **EP 0 498 080 B1**
(45) Date of publication and mention of the grant of the patent: **28.08.1996**
(21) Application number: 91122408.7
(22) Date of filing: 31.12.1991
(51) Int. Cl.: G01F 15/12

(54) **Measuring device and method for cleansing a measuring electrode in said device**
Messvorrichtung und Verfahren zum Reinigen einer Messelektrode der genannten Vorrichtung
Dispositif de mesure et procédé pour le nettoyage d'une électrode de mesure dudit dispositif

(30) Priority: 04.02.1991 SE 9100328
(43) Date of publication of application: 12.08.1992
(73) Proprietor: GAMBRO AB, S-220 10 Lund (SE)
(72) Inventor: Bertinsson, Gert-Inge, S-222 47 Lund (SE); Mattisson, Leif, S-240 17 Södra Sandby (SE); Ohlsson, Göran, S-250 07 Helsingborg (SE)
(74) Representative: Asketorp, Göran

(56) References cited:
- EP-A- 0 106 940
- EP-A- 0 337 292
- PATENT ABSTRACTS OF JAPAN vol. 14, no. 279 (P-1062) 15 June 1990 ; & JP-A-20 82 117

## Description

### AREA OF INVENTION

The present invention relates to a measuring device comprising at least one measuring electrode arranged in a liquid conduit through which a liquid is arranged to be flowed and in which the liquid itself can cause depositions on the electrode.

The invention further comprises a method for cleansing the measuring electrode of the measuring device.

The invention is principally intended to be used in connection with measuring flow rates, and specifically relatively small differences between two proportionally larger flows. The invention can, for example, be used to measure the ultrafiltration in dialysis, preferably haemodialysis. In haemodialysis a flow of pure dialysis fluid in the order of magnitude 0-1000 ml/min flows to the dialyser. This flow is increased from the dialyser with the ultrafiltration which usually is of the order of magnitude 0-40 ml/min or possibly somewhat higher.

### PRIOR ART

In GB-B-2 003 274 and in GB-A-2 056 691 there are described two similar systems for electromagnetic flow measurements. Two parallel conduits of the flows, the differential flow rate of which is to be measured, are used in both systems. According to the first mentioned document, the measuring is effected with the help of three electrodes which are influenced depending on the flowing medium and an external magnetic field. According to the latter document two main electrodes are influenced in the same way, and which cooperate with a plurality of ground electrodes.

Both systems suffer from the disadvantage that the flowing mediums can influence the two conduits and the electrodes respectively in different ways. If the constructions are used for example for measuring the ultrafiltration during dialysis, deposits from the impure dialysate are obtained on the electrodes and/or on the conduit walls themselves. A deposit of the order of few µm or even thiner layers can hereby result in considerable reading errors.

An improvement to the two above mentioned systems is described in EP-B1-0 106 940, whereby possible reading errors are compansated for by means of a repeated calibration.

EP-A2-337 292 discloses a method and an apparatus for cleansing the electrodes of such a measuring device by connecting the measuring electrodes in an electrolytic cell and applying a voltage to the cell. The electrodes will be cleansed by the current passing through the electrolytic cell.

### DISCLOSURE OF THE INVENTION

The object of the present invention is to improved the above described systems.

Thus there is provided a measuring device including at least one measuring electrode arranged in a conduit through which a liquid is arranged to be flowed which can cause depositions on the electrode, means being provided for connecting the measuring electrode as an electrode in an electrolytic cell including a second electrode, and by means for applying a voltage between these electrodes for cleansing of the measuring electrode.

At the cathode, i.e. the negative pole, the water's hydrogen is reduced to hydrogen gas during simultaneous formation of hydroxide ions. A portion of this hydrogen gas is dissolved in an atomic state in the underlying electrode metal (adsorption) whilst the remaining portion of the produced hydrogen gas forms bubbles on the electrode surfaces. The hydrogen gas bubbles are formed directly on the electrode's outermost atomic layer and therefore effectively drive away dirt from the surface at the same time that the solution is forceably agitated very close to the metal.

During the cleansing, the conduit in which the measuring electrode is arranged must be filled with a solution, for example water, dialysis solution or some other electrolyte which can conduct current between the anode and the cathode. The temperature must be at least such that the solution or the electrolyte is in its liquid phase. A temperature higher than this facilitates the cleansing. The pressure on the liquid in the conduit must not be higher than that hydrogen gas bubbles are formed.

The second electrode is preferably a ground electrode. It can however, alternatively, be another measuring electrode. Hereby, use can possibly be made of a low frequency alternating current so that both the measuring electrodes are cleansed alternately.

The device can also include two or more measuring electrodes. It is hereby suitable to connect these in parallel via the liquid to one or more ground electrodes for simultaneous cleansing.

The hydrogen gas which has dissolved in the cathode metal can, together with the oxygen gas which has been precipitated at the anode or the anodes, form a galvanic element when the electrolytic voltage has been terminated. This galvanic element can disrupt or disturb the operation of the flow measuring device.

According to the invention, the device comprises means for shortcircuiting the connected electrodes after the cleansing for dispelling any hydrogen, respectively oxygen, formed in these, whereby the short-circuit is arranged to be maintained during a time period in the order of magnitude 1-60 seconds, preferably at least 5 seconds.

Alternatively, the device comprises a means for applying a voltage to the connected electrodes after the cleansing in opposite direction to the cleansing voltage during a time period in the order of 1-60 seconds, preferably at least 5 seconds.

By these measures any hydrogen or oxygen which may be formed during the electrolysis are dispelled.

Moreover, there is provided, according to the invention, methods for cleansing the electrodes as mentioned in the claims.

Further features appear from the subclaims. Further objects, advantages and features are more clearly explained in the ensuing description of a preferred embodiment with reference to the appended drawings.

### BRIEF DESCRIPTION OF THE FIGURES

Figure 1 shows a sketch of a flow conduit with two included measuring electrodes and two ground electrodes.

Figure 2 shows a block diagram of a more complete device according to the invention with two flow conduits.

### PREFERRED EMBODIMENT OF THE INVENTION

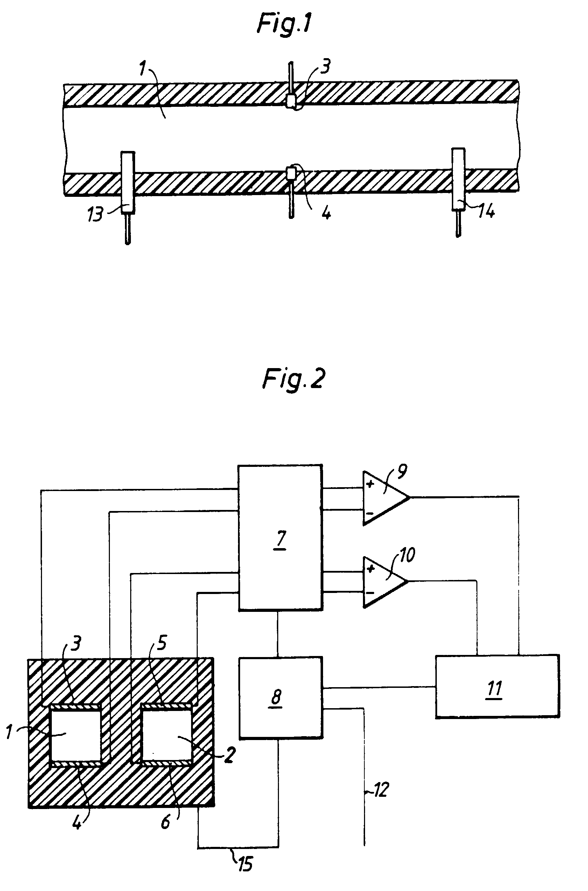

Fig. 1 shows a flow conduit 1 with two measuring electrodes 3 and 4 and two ground electrodes 13 and 14. A similar conduit 1 with measuring electrodes 3 and 4 is also shown in figure 2, further showing a flow measuring device which also includes a second conduit 2 with two measuring electrodes 5 and 6. The measuring process can be performed in the manner described in more detail in the above mentioned patent publications and, thus, does not need to be described in more detail herein.

In short, the four electrodes 3-6 are connected to a connecting device 7, the purpose of which is to supply the voltages which are required for the cleansing step, and to connect the electrodes to a measuring device, respectively. The measuring device is represented in figure 2 by the components 9 and 10, which, in turn, are connected to a microprocessor 11 or similar such device which is arranged to control both the measuring and the cleansing steps. Voltages required for the cleansing step are achieved with the help of a control device 8 which is connected to the measuring electrodes 3-6 via the device 7 and to one or both of the ground electrodes 13 and 14. The latter are not shown in figure 2, but connection thereto is represented by reference numeral 15. Reference numeral 12 denotes an external control input to the control device 8. Finally it can be noted that the conduits 1 and 2 are under the influence of an electro-magnetic field in such a way as described in more detail in the above mentioned patent publications which are hereby included in the present description.

The invention is naturally not restricted to solely the above described example and the examples which are described in said patent publications, but is defined by the following claims. For example the invention should be suitable for general cleansing of any type of measuring electrode which is in contact with a liquid.

## Claims

1. Measuring device including at least one measuring electrode (3-6) arranged in a conduit (1, 2) through which a liquid is arranged to be flowed which can cause depositions on the electrode, means (7, 8, 11) being provided for connecting the measuring electrode as an electrode in an electrolytic cell including a second electrode (13, 14 or 3-6), and by means (8) for applying a voltage between these electrodes for cleansing of the measuring electrode, **characterized** by means (7, 8, 11) for shortcircuiting the connected electrodes (3-6, 13, 14) after the cleansing, whereby the shortcircuit is arranged to be maintained during a time period in the order of magnitude 1-60 seconds, preferably at least 5 seconds.

2. Measuring device including at least one measuring electrode (3-6) arranged in a conduit (1, 2) through which a liquid is arranged to be flowed which can cause depositions on the electrode, means (7, 8, 11) being provided for connecting the measuring electrode as an electrode in an electrolytic cell including a second electrode (13, 14 or 3-6), and by means (8) for applying a voltage between these electrodes for cleansing of the measuring electrode, **characterized** by means (7, 8, 11) for applying a voltage to the connected electrodes (3-6, 13, 14) after the cleansing in opposite direction to the cleansing voltage during a time period in the order of 1-60 seconds, preferably at least 5 seconds.

3. Device according to claim 1 or 2, **characterized** in that the measuring electrode (3-6) is arranged to be connected as a cathode, i.e. with negative potential, during the cleansing.

4. Device according to claim 1, 2 or 3, **characterized** in that the second electrode (13, 14) is in the form of an ground electrode.

5. Device according to anyone of the previous claims, including two or more measuring electrodes (3-6), **characterized** in that said measuring electrodes are arranged to be connected in parallel via the liquid to one or more ground electrodes (13, 14) for simultaneous cleansing.

6. Device according to anyone of the previous claims, **characterized** in that said means (8) for applying a voltage is arranged to apply a voltage in the order of magnitude of 0,5-15V during at least 0,1-5 seconds.

7. Device according to anyone of the previous claims included in a flow measuring device including two conduits (1, 2) through which different liquid flows are arranged to be flowed and each of which is provided with two measuring electrodes (3, 4 and 5, 6, respectively) which are intended to measure the flow difference between the two conduits (1, 2) which are arranged to be exposed to an electromagnetic field, **characterized** in that all the measuring electrodes (3-6) are connected in parallel to respective ground electrodes (13, 14) connected to the liquid flows.

8. Device according to anyone of the previous claims, **characterized** in that it is arranged to measure the differences in the liquid flows to, and from, a dialyser intended for haemodialysis, respectively.

9. Method for cleansing a measuring electrode in a measuring device according to anyone of claims 1,3-8, including the steps of flowing a liquid beyond the measuring electrode, connecting the measuring electrode as an electrode in an electrolytic cell including a second electrode, and applying a voltage between these electrodes for cleansing of the measuring electrode, **characterized** by shortcircuiting the connected electrodes after the cleansing during a time period in the order of magnitude 1-60 seconds, preferably at least 5 seconds.

10. Method for cleansing a measuring electrode in a measuring device according to anyone of claims 2-8, including the steps of flowing a liquid beyond the measuring electrode connecting the measuring electrode as an electrode in an electrolytic cell including a second electrode, and applying a voltage between these electrodes for cleansing of the measuring electrode, **characterized** by applying a voltage to the connected electrodes, after the cleansing, in opposite direction to the cleansing voltage during a time period in the order of 1-60 seconds, preferably at least 5 seconds.

## Patentansprüche

1. Meßvorrichtung mit wenigstens einer Meßelektrode (3-6), die in einer Leitung (1, 2) angeordnet ist, durch welche eine Flüssigkeit fließen kann, die Abscheidungen auf der Elektrode verursachen kann, wobei Einrichtungen (7, 8, 11) zur Verbindung der Meßelektrode als eine Elektrode in einer elektrolytischen Zelle, die eine zweite Elektrode (13, 14 oder 3-6) einschließt, und Einrichtungen (8) zum Anlegen einer Spannung zwischen diesen Elektroden zur Reinigung der Meßelektrode vorgesehen sind, **gekennzeichnet durch** Einrichtungen (7, 8, 11) zum Kurzschließen der verbundenen Elektroden (3-6, 13, 14) nach dem Reinigen, wobei der Kurzschluß so angeordnet ist, daß er während einer Zeitdauer in der Größenordnung von 1 bis 60 sec, vorzugsweise wenigstens 5 sec, aufrecht erhalten wird.

2. Meßvorrichtung mit wenigstens einer Meßelektrode (3-6), die in einer Leitung (1, 2) angeordnet ist, durch welche eine Flüssigkeit fließen kann, die Abscheidungen auf der Elektrode verursachen kann, wobei Einrichtungen (7, 8, 11) zur Verbindung der Meßelektrode als eine Elektrode in einer elektrolytischen Zelle, die eine zweite Elektrode (13, 14 oder 3-6) einschließt, und Einrichtungen (8) zum Anlegen einer Spannung zwischen diesen Elektroden zur Reinigung der Meßelektrode vorgesehen sind, **gekennzeichnet durch** Einrichtungen (7, 8, 11) zum Anlegen einer Spannung an die verbundenen Elektroden (3-6, 13, 14) nach dem Reinigen in entgegengesetzter Richtung zu der Reinigungsspannung während einer Zeitdauer in der Größenordnung von 1 bis 60 sec, vorzugsweise wenigstens 5 sec.

3. Vorrichtung nach Anspruch 1 oder 2, **dadurch gekennzeichnet**, daß die Meßelektrode (3-6) so angeordnet ist, daß sie als eine Kathode, d. h. mit einem negativen Potential, während der Reinigung verbunden ist.

4. Vorrichtung nach Anspruch 1, 2 oder 3, **dadurch gekennzeichnet**, daß die zweite Elektrode (13, 14) in der Form einer Erdungselektrode vorliegt.

5. Vorrichtung nach einem der vorausgehenden Ansprüche mit zwei oder mehr Meßelektroden (3-6), **dadurch gekennzeichnet,** daß diese Meßelektroden so angeordnet sind, daß sie parallel über die Flüssigkeit mit einer oder mehreren Erdungselektroden (13, 14) für gleichzeitige Reinigung verbunden sind.

6. Vorrichtung nach einem der vorausgehenden Ansprüche, **dadurch gekennzeichnet**, daß die Einrichtungen (8) zum Anlegen einer Spannung so angeordnet sind, daß eine Spannung in der Größenordnung von 0,5 bis 15 Volt während wenigstens 0.1 bis 5 sec angelegt wird.

7. Vorrichtung nach einem der vorausgehenden Ansprüche mit einer Strömungsmeßeinrichtung, die zwei Leitungen (1, 2) einschließt, durch welche unterschiedliche Flüssigkeitsströme fließen können und von denen jede mit zwei Meßelektroden (3, 4 bzw. 5, 6) versehen ist, die dazu bestimmt sind, den Strömungsunterschied zwischen den beiden Leitungen (1, 2) zu messen, welche so angeordnet sind, daß sie einem elektromagnetischen Feld ausgesetzt sind, **dadurch gekennzeichnet**, daß alle Meßelektroden (3-6) parallel zu entsprechenden Erdungselektroden (13, 14), die mit den Flüssigkeitsströmen verbunden sind, verbunden sind.

8. Vorrichtung nach einem der vorausgehenden Ansprüche, **dadurch gekennzeichnet**, daß sie so angeordnet ist, daß sie die Unterschiede in den Flüssigkeitsströmen zu bzw. von einer für Hämodialyse bestimmten Dialyseeinrichtung mißt.

9. Verfahren zur Reinigung einer Meßelektrode in einer Meßvorrichtung nach einem der Ansprüche 1, 3 bis 8 mit den Stufen, in denen eine Flüssigkeit an der Meßelektrode vorbeifließt, die Meßelektrode als eine Elektrode in einer elektrolytischen Zelle, die eine zweite Elektrode einschließt, verbunden wird und eine Spannung zwischen diesen Elektroden zur Reinigung der Meßelektrode angelegt wird, **dadurch gekennzeichnet**, daß die verbundenen Elektroden nach dem Reinigen während einer Zeitdauer in der Größenordnung von 1 bis 60 sec, vorzugsweise wenigstens 5 sec, kurzgeschlossen werden.

10. Verfahren zur Reinigung einer Meßelektrode in einer Meßvorrichtung nach einem der Ansprüche 2 bis 8 mit den Stufen, in denen eine Flüssigkeit an der Meßelektrode vorbeifließt, die Meßelektrode als eine Elektrode in einer elektrolytischen Zelle, die eine zweite Elektrode einschließt, verbunden wird und eine Spannung zwischen diesen Elektroden zur Reinigung der Meßelektrode angelegt wird, **dadurch gekennzeichnet**, daß eine Spannung an die verbundenen Elektroden nach der Reinigung in entgegengesetzter Richtung zu der Reinigungsspannung während einer Zeitdauer in der Größenordnung von 1 bis 60 sec, vorzugsweise wenigstens 5 sec, angelegt wird.

## Revendications

1. Dispositif de mesure comprenant au moins une électrode de mesure (3-6) agencée dans un conduit (1,2) dans lequel on fait circuler un liquide qui peut provoquer des dépôts sur l'électrode, des moyens (7,8,11) étant prévus pour connecter l'électrode de mesure comme une électrode dans une pile électrolytique comportant une deuxième électrode (13,14 ou 3-6), et des moyens (8) étant prévus pour appliquer une tension entre ces électrodes afin de nettoyer l'électrode de mesure, caractérisé par des moyens (7,8,11) pour court-circuiter les électrodes connectées (3-6,13,14), après le nettoyage, le court-circuit étant prévu pour être maintenu pendant un laps de temps d'un ordre de grandeur de 1 à 60 secondes, et de préférence pendant au moins 5 secondes.

2. Dispositif de mesure comprenant au moins une électrode de mesure (3-6) agencée dans un conduit (1,2) dans lequel on fait circuler un liquide qui peut provoquer des dépôts sur l'électrode, des moyens (7,8,11) étant prévus pour connecter l'électrode de mesure comme une éelctrode dans une pile électrolytique comportant une deuxième électrode (13,14 ou 3-6), et des moyens (8) étant prévus pour appliquer une tension entre ces électrodes afin de nettoyer l'électrode de mesure, caractérisé par des moyens (7,8,11) pour appliquer une tension aux électrodes connectées (3-6, 13,14) après le nettoyage, en sens opposé à la tension de nettoyage, pendant un laps de temps de l'ordre de 1 à 60 secondes et de préférence pendant au moins 5 secondes.

3. Dispositif suivant la revendication 1 ou 2, caractérisé en ce que l'électrode de mesure (3-6) est agencée pour être connectée comme une cathode, c'est-à-dire avec un potentiel négatif, pendant le nettoyage.

4. Dispositif suivant la revendication 1, 2 ou 3, caractérisé en ce que la deuxième électrode (13, 14) est sous la forme d'une électrode de terre.

5. Dispositif suivant une quelconque des revendications précédentes, comprenant deux électrodes de mesure ou plus (3-6), caractérisé en ce que lesdites électrodes de mesure sont agencées pour être connectées en parallèle, par l'intermédiaire du liquide, à une ou plusieurs électrodes de terre (13,14),pour nettoyage simultané.

6. Dispositif suivant une quelconque des revendications précédentes, caractérisé en ce que lesdits moyens (8) d'application d'une tension sont prévus pour appliquer une tension de l'ordre de grandeur de 0,5-15 V pendant au moins 0,1-5 secondes.

7. Dispositif suivant une quelconque des revendications précédentes, inclus dans un dispositif de mesure de débit comprenant deux conduits (1,2) dans lesquels on fait circuler des écoulements différents de liquide et dont chacun comporte deux électrodes de mesure (3,4 et 5, 6, respectivement) qui sont destinées à mesurer la différence de débit entre les deux conduits (1,2) qui sont agencés de façon à être exposés à un champ électromagnétique, caractérisé en ce que toutes les électrodes de mesure (3-6) sont connectées en parallèle à des électrodes de terre respectives (13,14) connectées aux écoulements de liquide.

8. Dispositif suivant une quelconque des revendications précédentes, caractérisé en ce qu'il est agencé pour mesurer les différences des débits de liquide à destination et en provenance d'un dialyseur prévu pour une hémodialyse, respectivement.

9. Procédé de nettoyage d'une électrode de mesure dans un dispositif de mesure suivant une quelconque des revendications 1,3-8, qui comprend les étapes de mise en circulation d'un liquide au-delà de l'électrode de mesure, connexion de l'électrode de mesure comme une électrode dans une pile électrolytique comportant une deuxième électrode, et application d'une tension entre ces électrodes pour nettoyer l'électrode de mesure, caractérisé en ce qu'on court-circuite les électrodes connectées, après le nettoyage, pendant un laps de temps de l'ordre de grandeur de 1-60 secondes, et de préférence pendant au moins 5 secondes.

10. Procédé de nettoyage d'une électrode de mesure dans un dispositif de mesure suivant une quelconque des revendications 2 à 8, qui comprend les étapes de mise en circulation d'un liquide au-delà de l'électrode de mesure, connexion de l'électrode de mesure comme une électrode dans une pile électrolytique comportant une deuxième électrode, et application d'une tension entre ces électrodes pour nettoyer l'électrode de mesure, caractérisé en ce qu'on applique une tension aux électrodes connectées, après le nettoyage, en sens opposé à la tension de nettoyage, pendant un laps de temps de l'ordre de 1-60 secondes, et de préférence pendant au moins 5 secondes.
